# EUROPÄISCHE PATENTSCHRIFT

(11) **EP 2 343 221 B1**
(45) Veröffentlichungstag und Bekanntmachung des Hinweises auf die Patenterteilung: **19.09.2012**
(21) Anmeldenummer: 10189427.7
(22) Anmeldetag: 29.10.2010
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 13.07.2011
(73) Patentinhaber: ISE Automotive GmbH, 51702 Bergneustadt (DE)
(72) Erfinder: Nass, Michael, 51702 Bergneustadt (DE); Beki, Gürkan, 51766 Engelskirchen (DE)
(74) Vertreter: Kalkoff & Partner

(56) Entgegenhaltungen:
- EP-A1- 1 127 751
- EP-A2- 1 857 332
- DE-A1- 19 712 955
- US-A1- 2009 152 854

## Beschreibung

Die Erfindung betrifft ein Überrollschutzsystem für Kraftfahrzeuge, mit
- einem zwischen einer Lagerungsposition und einer Überschlagsposition verstellbaren Überrollkörper,
- einer den Überrollkörper in der Einbaulage am Kraftfahrzeug überdeckenden Abdeckung mit einer Durchtrittsöffnung für den Überrollkörper und
- einem die Durchtrittsöffnung in der Lagerungsposition des Überrollkörpers verschließenden Verschlusskörper.

Überrollschutzsysteme der eingangs genannten Art sind in vielfältigen Ausgestaltungen aus dem Stand der Technik bekannt. Sie dienen bei Kraftfahrzeugen ohne ein starres Dach, wie Cabriolets oder Roadstern, zum Schutz der Insassen im Falle eines Überschlages des Fahrzeugs. Gemeinsam mit dem Windschutzscheibenrahmen spannen dabei die Überrollkörper der Überrollschutzsysteme einen Überlebensraum auf, der die Fahrzeuginsassen bei einem Überschlag schützt.

Neben starr am Fahrzeug angeordneten Überrollkörpern in Form von Überrollbügeln, welche sich sowohl über die gesamte Fahrzeugbreite erstrecken, aber auch nur jeweils hinter einem Fahrzeugsitz angeordnet sein können, haben sich mittlerweile aktive Überrollschutzsysteme etabliert, bei denen der Überrollkörper im Normalzustand in einer von außen nicht sichtbaren Lagerungsposition angeordnet ist und erst im Bedarfsfall, nämlich bei einem drohenden Überschlag, in die Überschlagsposition verstellt wird.

Damit das Fahrzeug durch das eingebaute Überrollschutzsystem keine optische Beeinträchtigung erfährt, ist - bezogen auf die Einbaulage des Überrollschutzsystems am Kraftfahrzeug - oberhalb des Überrollkörpers eine diesen verdeckende Abdeckung angeordnet, welche an die Fahrzeugkontur angepasst ist. Um die Sicherungsfunktion des Überrollschutzsystems zu gewährleisten, weist die Abdeckung eine Durchtrittsöffnung auf, die im Gefahrenfall eine zuverlässige Verlagerung des Überrollkörpers aus der Lagerungsposition durch die Abdeckung hindurch in die Überschlagsposition ermöglicht. Die Durchtrittsöffnung ist dabei durch einen Verschlusskörper verdeckt, um einen möglichst homogenen optischen Eindruck der Abdeckung zu erreichen.

Das Dokument US 2009/0152854 offenbart ein Überrollschutzsystem nach dem Oberbegriff des Anspruchs 1.

Um eine zuverlässige Entfernung der Abdeckung im Falle einer Auslösung des Überrollkörpers zu gewährleisten, ist diese üblicherweise in der Einbaulage mit dem Überrollkörper verbunden. Aufgrund der in der Einbaulage auftretenden Lagetoleranzen zwischen der Abdeckung und dem am Fahrzeug angeordneten Überrollkörper tritt mitunter das Problem auf, dass der Verschlusskörper ungleichmäßig gegenüber der diesen umgebenden Abdeckung angeordnet ist, so dass sich für den Betrachter ein störender optischer Eindruck einstellt. Eine Ausrichtung der Abdeckung und des Überrollkörpers relativ zueinander, um eine optisch ansprechende Anordnung des Verschlusskörpers zu erreichen, ist nur mit einem erheblichen Aufwand zu erreichen.

Hiervon ausgehend liegt der Erfindung die Aufgabe zugrunde, ein Überrollschutzsystem mit einem die Abdeckung verschließenden Verschlusskörper bereitzustellen, der sich in einfacher Weise gegenüber der Abdeckung ausrichten lässt.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass der Verschlusskörper zu dessen Ausrichtung gegenüber der Durchtrittsöffnung sowie zur Lagesicherung an der Abdeckung elastisch mit dem Überrollkörper verbunden ist. Die elastische Anordnung des Verschlusskörpers an dem Überrollkörper ermöglicht es dabei, den Verschlusskörper auch im mit dem Überrollkörper verbundenen Zustand derart gegenüber dem Überrollkörper zu verstellen, dass dieser in vorgegebener Weise an der Durchtrittsöffnung und somit in optisch ansprechender Weise an der Abdeckung angeordnet ist. Die elastische Verstellbarkeit der Abdeckung gegenüber dem Überrollkörper gewährleistet dabei, dass die vorhandenen Lagetoleranzen zwischen der Abdeckung und dem Überrollkörper unter Beibehaltung der Verbindung von Verschlusskörper und Überrollkörper in einfacher Weise ausgeglichen werden können, so dass im montierten Zustand des Verschlusskörpers an der Abdeckung ein durchgehender und optische ansprechender Gesamteindruck erreicht werden kann. Grundsätzlich wird eine Anpassbarkeit des Verschlusskörpers bereits durch eine elastische Verbindung in nur einer Bewegungsrichtung, bspw. - bezogen auf die Einbaulage - in Fahrzeuglängs- oder Fahrzeugquerrichtung erreicht. Nach einer besonders vorteilhaften Ausgestaltung der Erfindung ist die elastische Verbindung jedoch derart ausgebildet, dass der Verschlusskörper in einer durch den Öffnungsquerschnitt der Durchtrittsöffnung gebildeten Ebene verstellbar ist. Gemäß dieser Ausgestaltung ermöglicht die elastische Verbindung eine elastische Verlagerung des mit dem Überrollkörper verbundenen Verschlusskörpers sowohl in Fahrzeuglängs- als auch in Fahrzeugquerrichtung, so dass eine sehr exakte Anpassung des Verschlusskörpers an die Abdeckung möglich ist.

Zur Lagesicherung des Verschlusskörpers in Z-Achsenrichtung des Fahrzeugs, die der Fahrzeughochachse entspricht, kann der Verschlusskörper grundsätzlich beliebig ausgebildet sein. Nach einer besonders vorteilhaften Ausgestaltung der Erfindung ist die elastische Verbindung jedoch zur Vorspannung des Verschlusskörpers in Richtung auf den Überrollkörper ausgebildet. Durch diese Ausgestaltung der Erfindung wird in ergänzender Weise gewährleistet, dass der Verschlusskörper zuverlässig mit dem Überrollkörper verbunden und an der Abdeckung angeordnet ist. Die Vorspannung gewährleistet dabei in besonderer Weise, dass es zu einer Verlagerung des Verschlusskörpers in Z-Achsenrichtung in Richtung auf den Überrollkörper kommt, wodurch sich eine ergänzende Positionssicherung des Verschlusskörpers ergibt.

Die Ausgestaltung der elastischen Verbindung des Verschlusskörpers mit dem Überrollkörper kann grundsätzlich in beliebiger Weise erfolgen. Nach einer besonders vorteilhaften Ausgestaltung der Erfindung ist der Verschlusskörper jedoch über elastisch ausgebildete Verbindungsmittel mit dem Überrollkörper verbunden. Die Verwendung elastisch ausgebildeter Verbindungsmittel erlaubt in einfacher Weise einen Toleranzausgleich, um eine vorgegebene Anordnung des Verschlusskörpers an der Abdeckung zu erreichen. Die Verbindungsmittel erstrecken sich dabei in einem Bereich zwischen dem Verschlusskörper und dem Überrollkörper und verbinden diese miteinander. Aufgrund der elastischen Ausgestaltung der Verbindungsmittel ist eine Festlegung der Lage des Verschlusskörpers in besonders einfacher Weise möglich.

Die Verbindung der Verbindungsmittel mit dem Verschlusskörper und dem Überrollkörper kann dabei entsprechend der konstruktiven Vorgaben frei gewählt werden. Nach einer vorteilhaften Ausgestaltung der Erfindung sind die Verbindungsmittel jedoch zur form- und/oder kraftschlüssigen Verbindung des Verschlusskörpers an dem Überrollkörper ausgebildet. Diese Ausgestaltung der Erfindung lässt sich besonders einfach und kostengünstig herstellen und bietet darüber hinaus eine zuverlässige Festlegung der Position des Verschlusskörpers gegenüber dem Überrollkörper und somit gegenüber der Durchtrittsöffnung bzw. der die Durchtrittsöffnung umgebenden Abdeckung. In Abhängigkeit von der Ausgestaltung der form- und/oder kraftschlüssigen Verbindung lässt sich dabei zudem eine einfache Austauschbarkeit des Verschlusskörpers für den Fall realisieren, dass dieser im Fall von Beschädigungen ausgetauscht werden muss.

Wie bereits an obiger Stelle angegeben, können die Verbindungsmittel grundsätzlich frei gewählt werden. Nach einer besonders vorteilhaften Ausgestaltung der Erfindung sind die Verbindungsmittel jedoch durch einen, vorzugsweise zwei von einer Unterseite des Verschlusskörpers vorstehende elastische Stege gebildet, die in der Lagerungsposition form- und/oder kraftschlüssig in an dem Überrollkörper angeordneten Ausnehmungen angeordnet sind. Gemäß dieser Ausgestaltung der Erfindung sind die Stege derart dimensioniert, dass sie in Verbindung mit dem Überrollkörper eine elastische Verstellung des Verschlusskörpers gegenüber der Abdeckung erlauben. Die Stege sind dabei vorteilhafterweise einstückig mit dem Verschlusskörper ausgebildet und erstrecken sich in Richtung auf den Überrollkörper, mit dem sie durch Anordnung der dem Überrollkörper zugeordneten Enden der Stege in entsprechenden Ausnehmungen verbunden sind. Die Ausnehmungen sind dabei an die Form der Stege angepasst, so dass im Falle deren Anordnung in den Ausnehmungen eine zuverlässige Verbindung zwischen dem Überrollkörper und dem Verschlusskörper besteht.

Über die Ausgestaltung der Ausnehmung sowie deren Ausrichtung sowie über die Ausgestaltung der mit den Ausnehmungen zusammenwirkenden Stege lässt sich dabei die elastische Verstellbarkeit des Verschlusskörpers zum Toleranzausgleich in geeigneter Weise festlegen. Besonders vorteilhafterweise sind die Ausnehmungen dabei durch vorteilhafterweise längsgerichtete Klemmnute gebildet, welche an die Stege des Verschlusskörpers angepasst sind. Bei einer Ausgestaltung der Klemmnute mit einer Länge, die über die Breite der Stege hinausgeht, kann eine Anpassung in Längsrichtung der Klemmnute durch Verschiebung der Stege in den Klemmnuten erreicht werden. In einer quer zu den Klemmnuten verlaufenden Richtung erfolgt die Ausrichtung des Verschlusskörpers aufgrund der Elastizität der Stege, welche eine Verlagerung des Verschlusskörpers gegenüber der Abdeckung unter Beibehaltung der Verbindung mit dem Überrollkörper ermöglichen. Im Falle der Ausgestaltung der Klemmnut derart, dass sie auch in Z-Achsenrichtung des Fahrzeugs eine Festlegung der Position des Verschlusskörpers gegenüber dem Überrollkörper erlaubt, kann die Klemmnut in ergänzender Weise zur Fixierung der Z-Lage des Verschlusskörpers genutzt werden. Die Klemmnut weist dabei eine Tiefe auf, die über die Tiefe hinaus geht, welche mindestens zur Verbindung des Verschlusskörpers mittels der Stege in den Klemmnuten erforderlich ist. Über die Einschubhilfe der Stege in die Klemmnuten kann dann die Position festgelegt werden.

Besonders vorteilhafterweise sind die Stege dabei im Verbindungsbereich mit den Ausnehmungen profiliert ausgebildet. Diese Ausgestaltung der Erfindung gewährleistet in ergänzender Weise eine zuverlässige Verbindung des Verschlusskörpers mit dem Überrollkörper, nachdem die Profilierung eine ungewollte Verschiebung oder gar ein Herausrutschen der Stege aus den Ausnehmungen wirkungsvoll verhindert. Besonders vorteilhafterweise können dabei die den Ausnehmungen zugewandten Enden der Stege verjüngt ausgebildet sein, um so eine einfachere Montage des Verschlusskörpers an dem Überrollkörper, bzw. in den Ausnehmungen zu ermöglichen.

Die Anordnung der Ausnehmungen an dem Überrollkörper kann dabei in beliebiger Weise erfolgen. So besteht grundsätzlich die Möglichkeit, den Überrollkörper in seinem der Abdeckung zugewandten Bereich bereits mit entsprechenden Ausnehmungen auszugestalten. Nach einer besonders vorteilhaften Ausgestaltung der Erfindung sind die Ausnehmungen jedoch an einem an dem Überrollkörper anordbaren Kopplungselement angeordnet. Diese Ausgestaltung der Erfindung, wobei das Kopplungselement vorteilhafterweise an den Überrollkörper angepasst ist und sich in einfacher Weise an diesem montieren lässt, ermöglicht es, auf Anpassungen des Überrollkörpers zur Verbindung mit dem Verschlusskörper zu verzichten. Das Kopplungselement kann dabei in optimaler Weise an die Stege angepasst werden und liefert andererseits eine einfache Möglichkeit zur Anordnung an dem Überrollkörper. Besonders vorteilhafterweise ist das Kopplungselement dabei derart ausgebildet, dass es formschlüssig mit dem Überrollkörper verbindbar ist, insbesondere auf den Überrollkörper aufclipsbar ist. Ein derartiges Kopplungselement lässt sich besonders einfach und kostengünstig herstellen sowie in kürzester Zeit an dem Überrollkörper montieren. Zudem kann über die Ausgestaltung des Kopplungselementes ein ergänzender Toleranzausgleich erreicht werden, wenn das Kopplungselement verschiebbar gegenüber dem Überrollkörper ausgebildet ist.

Nach einer weiteren Ausgestaltung der Erfindung ist das Verbindungsmittel durch ein Federelement, insbesondere eine einenends mit dem Verschlusskörper und anderenends mit dem Überrollkörper verbundenen Zugfeder gebildet. Die Verwendung eines Federelements als Verbindungsmittel lässt sich zusätzlich oder alternativ zu andersartig ausgestalteten Verbindungsmitteln, wie bspw. den elastischen Stegen, verwenden. Das Federelement ist dabei so mit dem Überrollkörper verbunden, dass der Verschlusskörper in Richtung auf den Überrollkörper gezogen wird, so dass in Z-Achsenrichtung, bezogen auf die Einbaulage am Fahrzeug, eine besonders spielfreie Anordnungsmöglichkeit gegeben ist. Darüber hinaus verhindert die Verwendung eines Federelements, insbesondere einer Zugfeder, das Auftreten von Klappergeräuschen während des Fahrbetriebs, nachdem das Federelement den Verschlusskörper zuverlässig auf hierfür vorgesehene Anlagebereiche an der Abdeckung andrückt.

Ausführungsbeispiele der Erfindung werden nachstehend mit Bezug auf die Zeichnungen erläutert. In den Zeichnungen zeigen:
- Fig. 1: eine perspektivische Ansicht auf ein Überrollschutzsystem mit einer oberhalb eines Überrollkörpers angeordneten Abdeckung mit einem demontierten Verschlusskörper;
- Fig. 2: eine perspektivische Ansicht auf das Überrollschutzsystem von Fig. 1 ohne Darstellung des Verschlusskörpers;
- Fig. 3: eine Skizze einer Schnittdarstellung des Überrollschutzsystems von Fig. 1 in einer Lagerungsposition des Überrollkörpers und

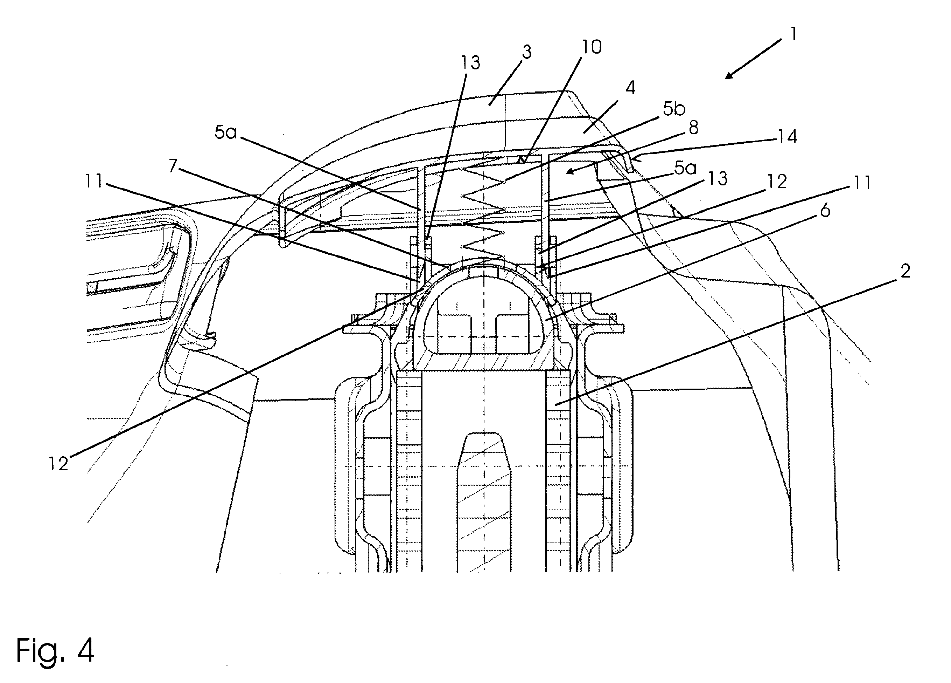

- Fig. 4: eine Skizze einer Schnittansicht einer zweiten Ausführungsform eines Überrollschutzsystems.

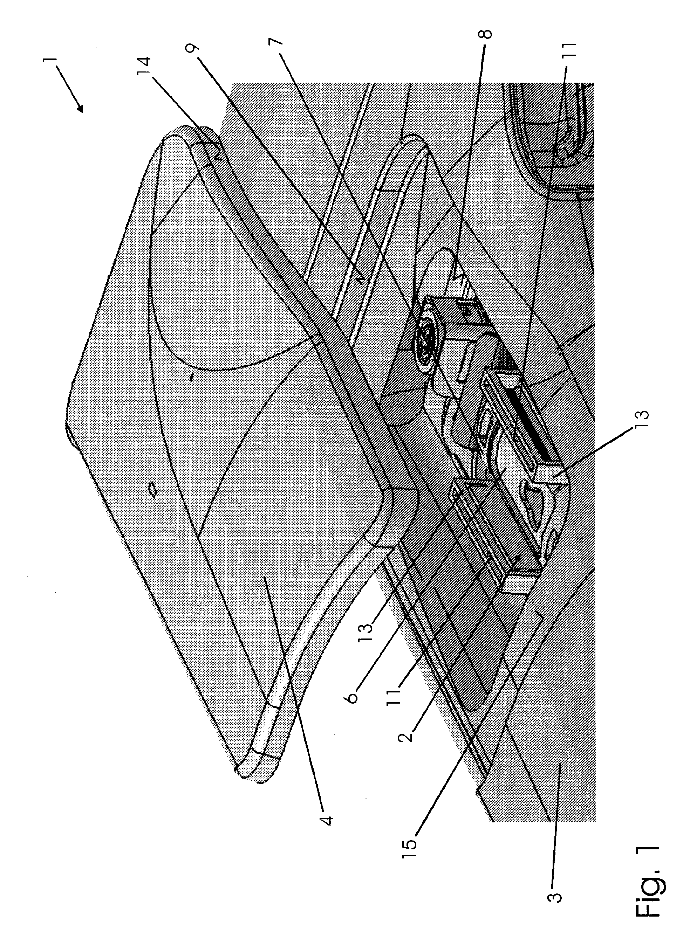

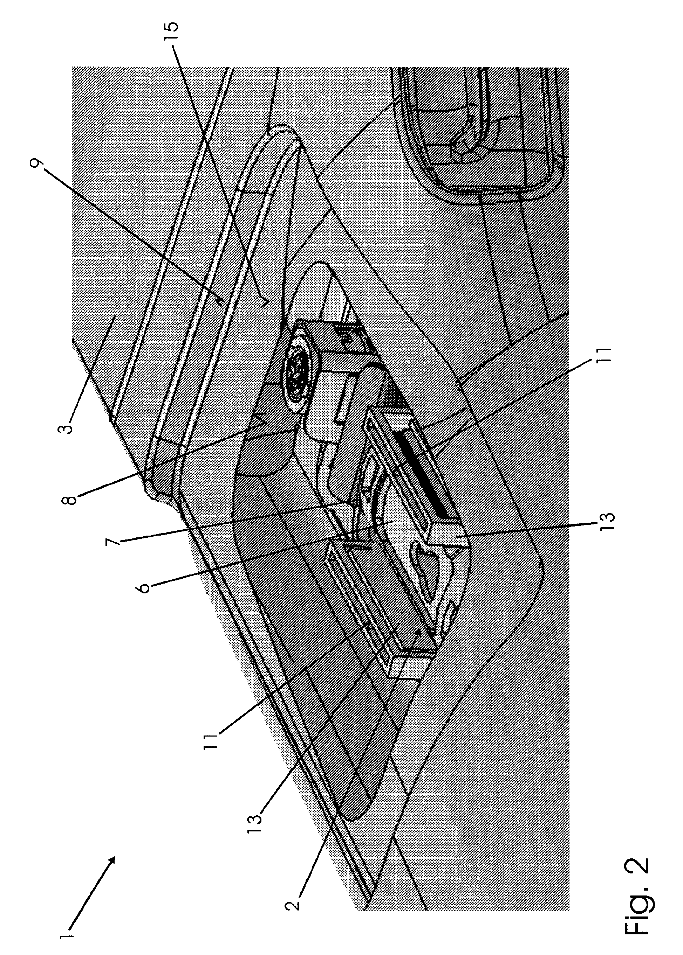

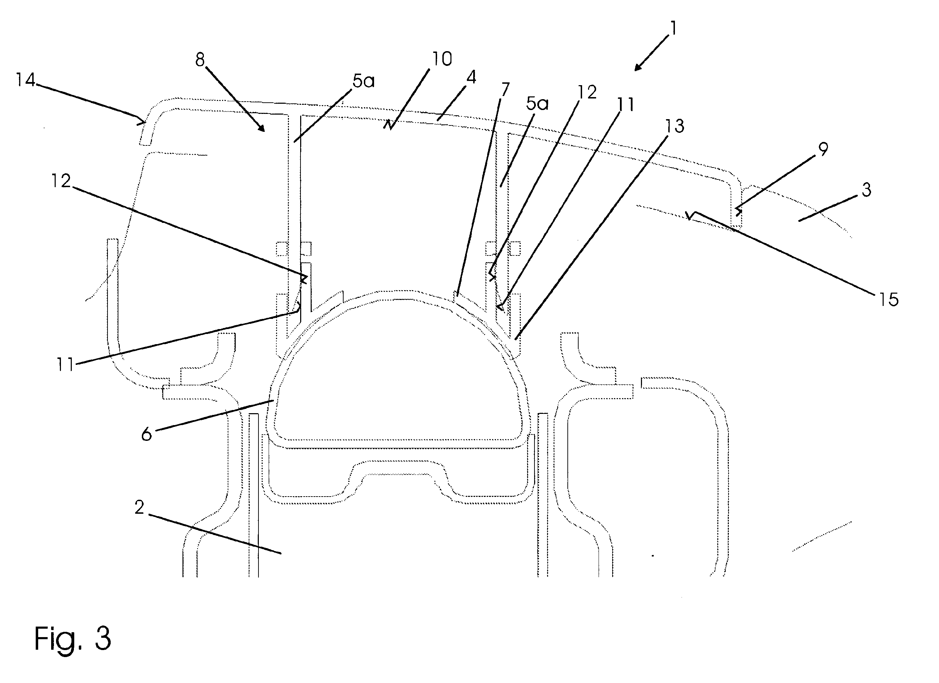

In den Fig. 1 bis 3 ist eine erste Ausführungsform eines Überrollschutzsystems 1 mit einem fahrzeugseitig anordbaren Überrollkörper 2 und einer den Überrollkörper 2 überdeckenden Abdeckung ₃ dargestellt. Der Überrollkörper 2 ist in einer Lagerungsposition dargestellt, in der dieser zurückgezogen unterhalb der Abdeckung ₃ angeordnet ist, so dass das Überrollschutzsystem 1 in der Einbaulage an einem hier nicht dargestellten Kraftfahrzeug von außen nicht sichtbar ist. Um eine Verlagerung des Überrollkörpers 2 aus der in den Fig. 1 bis ₃ dargestellten Lagerungsposition in eine hier nicht dargestellte Überschlagsposition zu gewährleisten, weist die Abdeckung ₃ eine Durchtrittsöffnung 8 auf, welche in der Einbaulage oberhalb des Überrollkörpers 2 angeordnet ist.

Um ein optisch ansprechendes Äußeres zu erreichen, ist die Durchtrittsöffnung 8 durch einen Verschlusskörper ₄ verschlossen, welcher in dessen Einbaulage in einer Aussparung ₉ der Abdeckung ₃ angeordnet ist. Zur Lagesicherung sowie zur Ausrichtung des Verschlusskörpers 4 gegenüber der Abdeckung ₃ weist der Verschlusskörper ₄ an seiner Unterseite 10 von dieser vorstehende Stege 5a auf. Die Stege ₅a sind dabei in einer montierten Lage des Verschlussdeckels 4 in Nuten 11 eines Kopplungselements 7 gehalten, wobei das Kopplungselement ₇ auf ein an der Oberseite des Überrollkörpers 2 angeordnetes Defoelement 6 aufgeclipst ist. Die Nuten 11 sind dabei in Aufnahmen 13 an dem Kopplungselement ₇ eingebracht und erlauben über die Eindringtiefe der Stege ₅a in die Nuten 11 eine Höhenanpassung des Verschlusskörpers ₄ gegenüber dem Überrollkörper 2. Die Stege ₅a sind dabei an ihren den Aufnahmen 13 zugewandten Enden verjüngt ausgebildet und weisen überdies eine Profilierung 12 auf, welche eine besonders zuverlässige Anordnung der Stege ₅a in den Nuten 11 gewährleisten.

Die elastische Verformbarkeit der Stege 5a sowie die Möglichkeit der Verschiebung der Stege ₅a in den Nuten 11 erlaubt eine Ausrichtung des Verschlusskörpers ₄ gegenüber dem Überrollkörper 2, so dass der Verschlusskörper ₄ mit seinem umlaufenden Rand innerhalb der Aussparungen ₉ der Abdeckung ₃ angeordnet ist, während sich ein ansprechender optischer Eindruck einstellt. Zur Festlegung der maximalen Verlagerung des Verschlusskörpers ₄ in Richtung auf den Überrollkörper 2 weist dabei die Aussparung ₉ eine Oberseite 15 auf, an der die Unterseite 10 des Verschlusskörpers ₄ in der montierten Lage anliegt.

In Fig. ₄ ist eine zweite Ausführungsform des Überrollschutzsystems 1 dargestellt, welches sich gegenüber dem in den Fig. 1 bis ₃ dargestellten Überrollschutzsystem 1 jedoch allein dadurch unterscheidet, dass zusätzlich zu der über die Stege ₅a hergestellten Verbindung des Verschlusskörpers ₄ mit dem Überrollkörper 2 eine Zugfeder ₅b verwendet wird, welche einenends an der Unterseite 10 des Verschlusskörpers ₄ und anderenends an dem Kopplungselement ₇ angeordnet ist, wobei die Zugfeder ₅b den Verschlusskörper ₄ in Richtung auf den Überrollkörper 2 zieht, so dass eine besonders klapperfreie Anordnung des Verschlusskörpers schlusskörpers 4 gewährleistet ist.

## Patentansprüche

1. Überrollschutzsystem für Kraftfahrzeuge, mit
- einem zwischen einer Lagerungsposition und einer Überschlagsposition verstellbaren Überrollkörper,
- einer den Überrollkörper in der Einbaulage am Kraftfahrzeug überdeckenden Abdeckung mit einer Durchtrittsöffnung für den Überrollkörper und
- einem die Durchtrittsöffnung in der Lagerungsposition des Überrollkörpers verschließenden Verschlusskörper,
**dadurch gekennzeichnet, dass**
der Verschlusskörper (4) zu dessen Ausrichtung gegenüber der Durchtrittsöffnung (8) sowie zur Lagesicherung an der Abdeckung (3) elastisch mit dem Überrollkörper (2) verbunden ist.

2. Überrollschutzsystem nach Anspruch 1, **dadurch gekennzeichnet, dass** die elastische Verbindung derart ausgebildet ist, dass der Verschlusskörper (4) in einer durch den Öffnungsquerschnitt der Durchtrittsöffnung (8) gebildeten Ebene verstellbar ist.

3. Überrollschutzsystem nach Anspruch 1 oder 2, **dadurch gekennzeichnet, dass** die elastische Verbindung zur Vorspannung des Verschlusskörpers (4) in Richtung auf den Überrollkörper (2) ausgebildet ist.

4. Überrollschutzsystem nach einem der vorhergehenden Ansprüche, **dadurch gekennzeichnet, dass** der Verschlusskörper (4) über elastisch ausgebildete Verbindungsmittel (5a, 5b) mit dem Überrollkörper (2) verbunden ist.

5. Überrollschutzsystem nach einem der vorhergehenden Ansprüche, **dadurch gekennzeichnet, dass** die Verbindungsmittel (5a, 5b) zur form- und/oder kraftschlüssigen Verbindung des Verschlusskörpers (4) an dem Überrollkörper (2) ausgebildet sind.

6. Überrollschutzsystem nach einem der vorhergehenden Ansprüche, **dadurch gekennzeichnet, dass** das Verbindungsmittel durch einen, vorzugsweise zwei von einer Unterseite (10) des Verschlusskörpers (4) vorstehende elastische Stege (5a) gebildet ist, die in der Lagerungsposition form- und/oder kraftschlüssig in an dem Überrollkörper (2) angeordneten Ausnehmungen (11) angeordnet sind.

7. Überrollschutzsystem nach einem der vorhergehenden Ansprüche, **dadurch gekennzeichnet, dass** die Ausnehmung durch eine Klemmnut (11) gebildet ist.

8. Überrollschutzsystem nach einem der vorhergehenden Ansprüche, **dadurch gekennzeichnet, dass** die Stege (5a) im Verbindungsbereich mit den Ausnehmungen (11) profiliert ausgebildet sind.

9. Überrollschutzsystem nach einem der vorhergehenden Ansprüche, **dadurch gekennzeichnet, dass** die Ausnehmungen (11) an einem an dem Überrollkörper (2) anordbaren Kopplungselement (7) angeordnet sind.

10. Überrollschutzsystem nach einem der vorhergehenden Ansprüche, **dadurch gekennzeichnet, dass** das Kopplungselement (7) formschlüssig mit dem Überrollkörper (2) verbunden ist, insbesondere auf dem Überrollkörper (2) aufgeclipst ist.

11. Überrollschutzsystem nach einem der vorhergehenden Ansprüche, **dadurch gekennzeichnet, dass** das Verbindungsmittel durch ein Federelement (5b), insbesondere eine einenends mit dem Verschlusskörper (4) und anderenends mit dem Überrollkörper (2) verbundene Zugfeder (5b) gebildet ist.

## Claims

1. A rollover protection system for motor vehicles, with
- a rollover body movable between a storage position and a rollover position,
- a cover, covering the rollover body in the installed location on the motor vehicle, with a through opening for the rollover body, and
- a closing body sealing the through opening in the storage position of the rollover body,
**characterized in that**
the closing body (4) is elastically connected to the rollover body (2) for the alignment thereof with respect to the through opening (8) and for securing the position on the cover (3).

2. The rollover protection system according to claim 1, **characterized in that** the elastic connection is formed such that the closing body (4) can be moved in a plane formed by the cross-section of the opening of the through opening (8).

3. The rollover protection system according to claim 1 or 2, **characterized in that** the elastic connection is designed for pretensioning the closing body (4) in the direction on the rollover body (2).

4. The rollover protection system according to one of the preceding claims, **characterized in that** the closing body (4) is connected to the rollover body (2) using elastically formed connection means (5a, Sb).

5. The roll over protection system according to one of the preceding claims, **characterized in that** the connection means (5a, 5b) are designed for the form-locking and/or force-locking connection of the closing body (4) to the rollover body (2).

6. The rollover protection system according to one of the preceding claims, **characterized in that** the connection means is formed by one, preferably two, elastic webs (5a) projecting from a lower side (10) of the closing body (4) that in the storage position are disposed in a form-locking and/or force-locking manner in recesses (11) disposed on the rollover body (2).

7. The rollover protection system according to one of the preceding claims, **characterized in that** the recess is formed by a clamping groove (11).

8. The rollover protection system according to one of the preceding claims, **characterized in that** the webs (5a) in the connection region are formed contoured with recesses (11).

9. The rollover protection system according to one of the preceding claims, **characterized in that** the recesses (11) are disposed at a coupling element (7) that can be arranged on the rollover body (2).

10. The rollover protection system according to one of the preceding claims, **characterized in that** the coupling element (7) is connected to the rollover body (2) in a form-locking manner, particularly clipped onto the rollover body (2).

11. The rollover protection system according to one of the preceding claims, **characterized in that** the connection means is formed by a spring element (5b), particularly a tension spring (5b) connected on one end to the closing body (4) and on the other end to the rollover body (2).

## Revendications

1. Système de protection contre les tonneaux pour des véhicules automobiles, comprenant
- un corps de protection contre les tonneaux réglable entre une position de rangement et une position de retournement,
- un cache recouvrant le corps de protection contre les tonneaux dans la position de montage sur le véhicule automobile avec une ouverture de passage pour le corps de protection contre les tonneaux et
- un corps de fermeture fermant l'ouverture de passage dans la position de rangement du corps de protection contre les tonneaux,
**caractérisé en ce que**
le corps de fermeture (4), afin d'être orienté par rapport à l'ouverture de passage (8) ainsi qu'afin d'être sécurisé en position contre le cache (3), est relié élastiquement au corps de protection contre les tonneaux (2).

2. Système de protection contre les tonneaux selon la revendication 1, **caractérisé en ce que** la liaison élastique est configurée de telle sorte que le corps de fermeture (4) est réglable dans un plan formé par la section transversale d'ouverture de l'ouverture de passage (8).

3. Système de protection contre les tonneaux selon la revendication 1 ou 2, **caractérisé en ce que** la liaison élastique, en vue de la précontrainte du corps de fermeture (4), est configurée en direction du corps de protection contre les tonneaux (2).

4. Système de protection contre les tonneaux selon une des revendications précédentes, **caractérisé en ce que** le corps de fermeture (4) est relié au corps de protection contre les tonneaux (2) par des moyens de liaison (5a, 5b) élastiques.

5. Système de protection contre les tonneaux selon une des revendications précédentes, **caractérisé en ce que** les moyens de liaison (5a, 5b) pour la liaison par complémentarité de forme et/ou de force du corps de fermeture (4) sont configurés contre le corps de protection contre les tonneaux (2).

6. Système de protection contre les tonneaux selon une des revendications précédentes, **caractérisé en ce que** le moyen de liaison est formé d'une, de préférence deux traverses élastiques (5a) dépassant d'une face inférieure (10) du corps de fermeture (4), lesquelles traverses sont agencées dans la position de rangement par complémentarité de forme et/ou de force dans des évidements (11) situés contre le corps de protection contre les tonneaux (2).

7. Système de protection contre les tonneaux selon une des revendications précédentes, **caractérisé en ce que** l'évidement est formé par une rainure de serrage (11).

8. Système de protection contre les tonneaux selon une des revendications précédentes, **caractérisé en ce que** les traverses (5a) ont une forme profilée dans la zone de liaison avec les évidements (11).

9. Système de protection contre les tonneaux selon une des revendications précédentes, **caractérisé en ce que** les évidements (11) sont agencés contre un élément d'accouplement (7) pouvant être disposé contre le corps de protection contre les tonneaux (2).

10. Système de protection contre les tonneaux selon une des revendications précédentes, **caractérisé en ce que** l'élément d'accouplement (7) est relié par complémentarité de forme au corps de protection contre les tonneaux (2), en particulier est clipsé sur le corps de protection contre les tonneaux (2).

11. Système de protection contre les tonneaux selon une des revendications précédentes, **caractérisé en ce que** le moyen de liaison est formé par un élément de ressort (5b), en particulier un ressort de traction (5b) relié à une extrémité au corps de fermeture (4) et à l'autre extrémité au corps de protection contre les tonneaux (2).
